# EUROPEAN PATENT APPLICATION

(11) **EP 3 346 432 A1**
(43) Date of publication of application: **11.07.2018**
(21) Application number: 17150604.1
(22) Date of filing: 09.01.2017
(51) Int. Cl.: G06Q 10/06, G06Q 50/06

(54) **DYNAMIC PROCESS SCREENING METHOD FOR A FACTORY IN OPERATION**

(71) Applicant: Environmental Protection Administration, Executive Yuan (a Taiwan Government), Taipei City 10042 (TW)
(72) Inventor: Ho, Ching-Jen, 10042 Taipei City (TW); Lai, Chun-Chi, 10042 Taipei City (TW); Chang, Fu-Chieh, 10042 Taipei City (TW); Tung, Tien-Hsing, 10595 Taipei City (TW); Kuo, Hsiu-Chuan, 10595 Taipei City (TW)
(74) Representative: Lang, Christian

(57) **Abstract**

A dynamic process screening method for a factory in operation includes: a pre-step, a first level assessment, a second level assessment, a third level assessment, a fourth level assessment, a correction assessment; and an assessment priority list including adjusting the weights of the first, second, third and fourth assessments, and based on the correction assessment, so as to form a new investigation list. The dynamic process screening method is capable of systematically providing assessment result which reflects the actual condition of the factories, making it more efficient to perform follow-up investigation and management of the factories.

## Description

### BACKGROUND OF THE INVENTION

### Field of the Invention

The present invention relates to a screening method, and more particularly to a dynamic process screening method for a factory in operation.

### Related Prior Art

Industrial pollution refers to waste gas, waste water and solid waste pollution to the environment, and is one of the most important pollution sources which cause environmental pollution. Many factories with potential process risks in operation might cause environmental pollution because of continuous or progressive process operation, which consequently affects people's health. Since resources are limited, it is critical to screen out the factories with high potential process risk, and should take corresponding management measures.

The conventional method for screening out the factories with high potential process risk includes: performing process risk assessment for each of the factories in operation based on the factories' registration data, and making an investigation priority list based on the process risk assessments. The investigation priority list includes a name list of the factories with high risk of pollution, in order facilitate subsequent investigation and management. However, due to the early process data is usually incomplete and inaccurate, and always changes with the change of market, industrial dynamics and environmental protection regulations, the process risk assessment which is made solely on the basis of the process data may not accurately reflect the actual continuous or progressive process risk of the factories in operation.

Therefore, using the conventional approach to manage so many factories whose registration and process data is incomplete usually consumes too much labor, material and time.

The present invention has arisen to mitigate and/or obviate the afore-described disadvantages.

### SUMMARY

The present invention is aimed at providing a dynamic process screening method for a factory in operation, which is capable of systematically providing assessment result which reflects the actual condition of the factories, making it more efficient to perform follow-up investigation and management of the factories.

Therefore, a dynamic process screening method for a factory in operation in accordance with a preferred embodiment of the present invention comprises the following steps: a pre-step including providing process risk data for each factory in operation in every industry; a first level assessment including screening out target compound with high risk of pollution based on the process risk data provided by the respective factories; a second level assessment including screening out categories or classifications with high risk of pollution based on the process risk data provided by the respective factories; a third level assessment including performing a hierarchical cross screening based on the declaration amount and the category scale data to make a preliminary survey list, as a priority order to assess the environmental assessment of the factories in operation; a fourth level assessment including providing a preliminary assessment result and local experience data based on the preliminary survey list, so as to produce an investigation list, as a priority order to investigate the environmental assessment of the factories in operation; a correction assessment including performing site survey based on the investigation list, and adjusting the weights of the target compound of the first assessment, the high risk pollution categories of the second assessment, the environmental assessment of the third assessment, and the ranking of the investigation list of the fourth assessment, based on the actual investigation result; and an assessment priority list including adjusting the weights of the first, second, third and fourth assessments, and based on the correction assessment, so as to form a new investigation list.

Preferably, the pre-step further includes an application and registration data for each factory in operation in every industry.

Preferably, the target compound is chlorine containing compound, the screening of the target compound in the first level assessment is based on plural selection factors, which include vertical mobility, the danger of groundwater pollution, high risk of cancer, the occurrence rate in the polluted workplace, preplanned detection rate, and reaction and formation path.

Preferably, the screening of the categories with high risk of pollution is made by reference to foreign and domestic industrial categories, the classification data of the domestic regulated workplaces are collected in order to better understand the distribution of the domestic industry category with high risk of pollution.

Preferably, if the industrial category registration data includes a factory which belongs to multiple categories, a preliminary assessment result should be included in a review of the amendment to the industrial category to determine suitable process category.

Preferably, the category scale data includes selection factors: general category of high risk of pollution, ranking of total declaration amount for a single category of high risk of pollution, general category of target compound declaration, general ranking of target compound declaration, amount of release, wet process, year, inspection and punishment data, which are cross ranked.

Preferably, the preliminary assessment result is a strict site preliminary assessment result, that is, considering the factory operation history, the production process characteristics and the hydro geological conditions.

Preferably, the preliminary assessment further includes the application of multiple investigation skills, determination of the sampling location of the high pollution risk soil and groundwater, in order to improve investigation efficiency, the ratio of the category of the to-be-investigated factory with high risk of pollution is also taken into consideration in order to produce an investigation list.

Preferably, the local experience data includes the inspection experience of the local environment protection agencies, the change in the area and even the rumor of pollution are used as source of screening data, by means of a questionnaire, the local experience is provided to assist in assessment of the pollution trend of the factories, or provide the name list of the local high risk pollution factories as a specified investigation list.

Preferably, the local experience data further includes process operation data and area sensitivity data, the process operation data takes the factory which was set up early as priority concern, puts emphasis on the process operation characteristic and wet process implementation, collects the data on the areas where chlorinated-solvent caused soil and water pollution is very likely to occur, and relevant inspection and punishment data, assesses whether there is similar pollution area, and adjusts the ranking of the investigation list, the area sensitivity data is that the adjacent water protection zone, agricultural irrigation land, groundwater area, high population area are priority screening areas, and the priority ranking of investigation list can be adjusted.

Preferably, the actual investigation result includes: total amount of declaration of polluted projects, cycle life of the product, total scale and proportion of category declaration, process operation characteristic and year.

These together with other objects of the invention, along with the various features of novelty which characterize the invention, are pointed out with particularity in the claims annexed to and forming a part of this disclosure. For a better understanding of the invention, its operating advantages and the specific objects attained by its uses, reference should be had to the accompanying drawings and descriptive matter in which there are illustrated preferred embodiments of the invention.

### BRIEF DESCRIPTION OF THE DRAWINGS

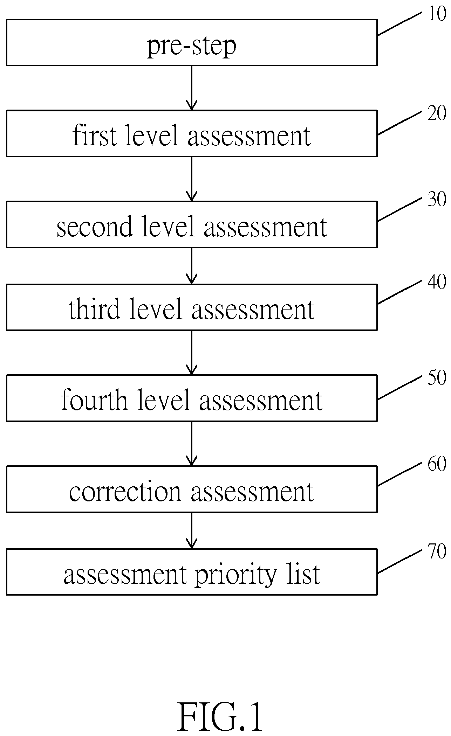

Fig. 1 is a flow chart showing the steps of a dynamic process screening method for a factory in operation in accordance with the preferred embodiment of the present invention.

### DETAILED DESCRIPTION

The present invention will be clearer from the following description when viewed together with the accompanying drawings, which show, for purpose of illustrations only, the preferred embodiment in accordance with the present invention.

Referring to Fig. 1, a dynamic process screening method for a factory in operation in accordance with the preferred embodiment of the present invention comprises the following steps: a pre-step 10, a first level assessment 20, a second level assessment 30, a third level assessment 40, a fourth level assessment 50, a correction assessment 60, and an assessment priority list 70.

The pre-step 10 includes providing process risk data for each factory in operation in every industry. In this embodiment, the pre-step 10 further includes an application and registration data for each factory in operation in every industry, and the process risk data at least includes process parameters.

It should be noted that the use of raw material, manufacturing, deposit, amount of abandonment will be influenced by the ups and downs of the industry, and the poly of the factories, such as the quality of process management, and factory expansion. Collecting the data on a pollution project in the work places (including age, history usage, application discussion, for example, the application and amount of use of compounds may differ from industry to industry), and knowing the insufficiency of the data age, for example, the range of the database cannot trace back to the workplaces where chlorinated organic solvent was once used in the early days, especially the workplaces where high pollutants (such as the chlorinated organic solvent) were used in the early days, but are not used anymore today. Besides, the distribution and the degradation trend of the chlorinated organic solvent change from environmental medium to environmental medium, including adsorption, volatilization, dissolution, transformation, immigration and other multiple physical, chemical and biological characteristics. Environmental fate study of the environmental pollutant measurement data, and interpretation of the significance of the study, for example, the verification result is the correct feedback analysis only when compound verification feedback discussion only calculates or takes consideration of the workplace which has been reported or declared, namely, eliminating the error caused by degradation mechanism.

The first level assessment 20 includes screening out target compound with high risk of pollution based on the process risk data provided by the respective factories. In this embodiment, the target compound is chlorine containing compound. The screening of the target compound in the first level assessment 20 is based on plural selection factors, which include vertical mobility, the danger of groundwater pollution, high risk of cancer, the occurrence rate in the polluted workplace, preplanned detection or seizure rate, and reaction and formation path, as shown in the below table 1.

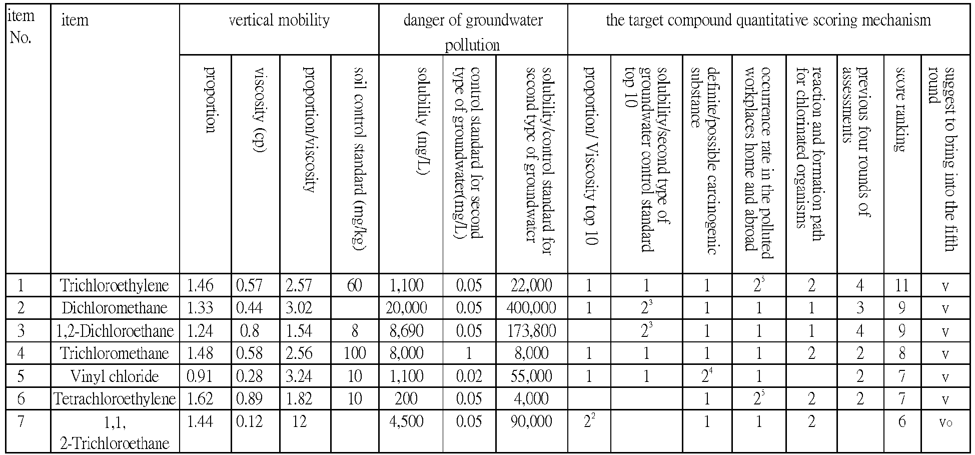

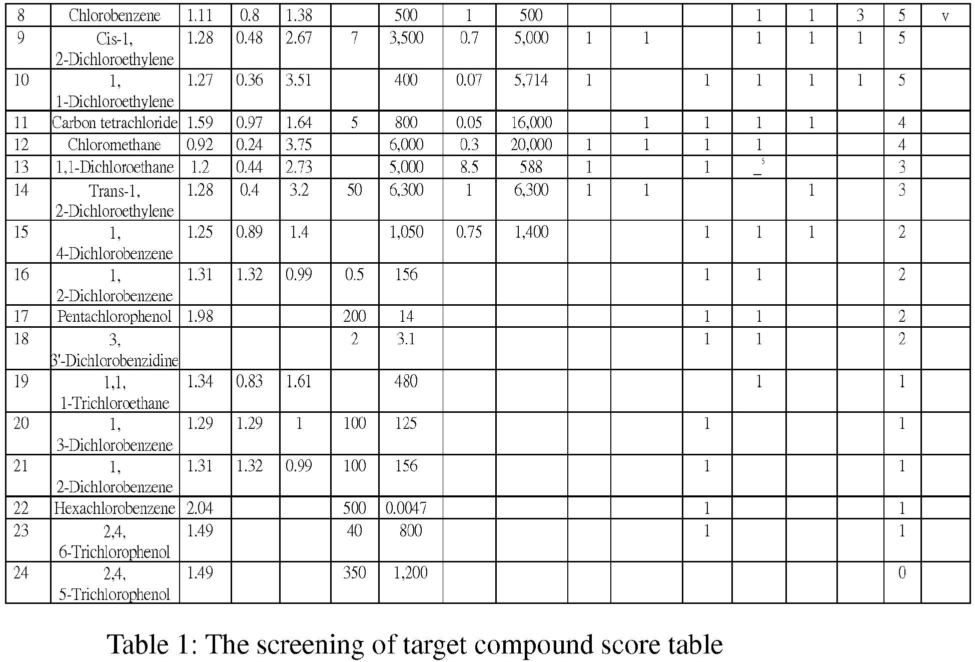

It should be noted that: 1, the carcinogenic substances are from IARC(The International Agency for Research on Cancer), the reaction and formation path have been described by McCarty and Semprini (1994), Vogel et al. (1987), and the setting of the carcinogenic substances varies from region to region. 2. The specific weight and viscosity values of the 1,1,2-Trichloroethane are significantly higher than those of other pollutants. 3, the solubility and the groundwater control standard values of the Dichloromethane and the 1,2-Dichloroethane are much higher than those of other pollutants. 4. Vinyl chloride is confirmed as carcinogenic substance by IARC AND IRIS. 5, the occurrence rate of Trichloroethylene and Tetrachloroethylene is significantly higher than that of other pollutants due to the fact that Trichloroethylene and Tetrachloroethylene were found in 391 and 309 out of 1444 workplaces investigated by ATSDR. 1.1-Dichloroethane is difficult to detect, and its groundwater control standard should be made accordingly. The reaction, formation and degradation path of the compounds should be taken account to assess the potential accumulation of the related compounds. Take the dechlorination of chlorinated organic compounds as an example, the VC does not score, cis-1,2-DCE scores 1 point, TCE and PCE score 2 points. 7, based on the previous four rounds of assessments, and the declarer of the pollution control database calculates the detectable rate, a detectable rate of 0 does not score, a detectable rate less than 50% scores one point, a detectable rate greater than 51% scores 2 point, and weighted score will be used when there are more than 10 declared workplaces or more than 5 excessive workplaces. 8, symbol ┌ ̌┘: enter or bring into; ┌○┘: not the regulated toxic chemical substances to strengthen classification and facilitate the screening process.

Based on the investigation results, the feedback of the front end data of the initial screening can be guaranteed, and the ranking and weight of the selection factors for every round of target compound. Namely, every time when the dynamic process screening method is carried out at the factories in operation, the number of the target compounds is different, and mechanism must be adjusted based on the detection and feedback of the target compounds.

The second level assessment 30 includes screening out categories or classifications with high risk of pollution based on the process risk data provided by the respective factories. In this embodiment, the screening of the categories with high risk of pollution is made by reference to foreign and domestic industrial categories. We also collected the classification data of the domestic regulated workplaces in order to better understand the distribution of the domestic industry category with high risk of pollution.

Table 2 made by Kueper et al. (2003) shows the industries and industrial processes which are likely to cause chlorinated solvent pollution to the groundwater, wherein the mechanical and metal processing account for more than half of the pollution, and therefore can be used as reference for screening of operation classification. Tables 3 and 4 show the application of the chlorinated solvent, and the proportion of the compounds used in the application. For example, the use of Tetrachloroethylene in dry cleaning accounts for 56%, TCE in degreasing accounts for 44%, and are also highly likely to be detected in other underground environment investigation. Table 4 shows that the regulated factories which cause chlorinated solvent pollution to the soil and the groundwater are found to belong to similar industrial categories, and therefore, the relevant industrial categories can be listed as priority categories.

**Table 2: the industries and industrial processes which are likely to cause chlorinated solvent pollution.**

| Industry | Industrial process |
|---|---|
| Electronics manufacturing | Metal cleaning |
| Solvent production | Metal machining |
| Pesticide/herbicide manufacturing | Tool and die operations |
| Dry cleaning | Vapor and liquid degreasing |
| Instrument manufacturing | Paint stripping |
| Solvent recycling | Storage and transfer of solvents |
| Engine manufacturing | |
| Steel product manufacturing | |
| Chemical production | |
| Rocket engine/fuel manufacturing | |
| Aircraft cleaning/engine degreasing | |

| | |
|---|---|
| Sources is from B.H. Kueper et al, Environment Agency UK, An illustrated handbook of DNAPL transport and fate in the subsurface, 2003. | |

**Table 3: the application of the chlorinated solvent**

| Solvent | application (ranked by importance) |
|---|---|
| Dichloromethane, Methylene Chloride, DCM | Paint remover, Metal cleaning agent, Pharmaceutical, Aerosols, Acetate films |
| Trichloromethane, TCM | Fluorocarbon synthesis, Pharmaceutical |
| 1,1,1-Trichloroethane, TCA | Metal and plastic cleaning, Glue, Aerosols, Ink |
| Carbontetrachloride, CTC | Metal cleaning, Dry cleaning, Extractions |
| Trichloroethylene, TCE | Fluorocarbon synthesis, Fire extinguishing agent |
| Perchloroethylene, PCE | Dry cleaning, Metal cleaning, In-process product |

| | |
|---|---|
| Sources is from Rivett, M. O. Lerner D. N. and LLloyd J. W. June 4, 1990, Chlorinated Solvents in UK Aquifers,Journal of IWEM, pp.242-250. | |

**Table 4: Percentage of chlorinated organic solvents for use in different compounds**

| Application | Percentage of chlorinated organic solvents for use in different compounds (%) | | | |
|---|---|---|---|---|
| | TCA | DCM | PCE | TCE |
| Adhesives | 9 | - | - | 1 |
| Aerosols | 11 | 29 | - | - |
| Intermediate | - | - | 29 | - |
| Cold cleaning | 20 | - | - | - |
| Dry cleaning | - | - | 56 | - |
| Electronics | 6 | 8 | - | - |
| Degreasing | 44 | 9 | 11 | 85 |
| Paint stripping | - | 27 | - | - |
| Urethane foam | - | 10 | - | - |
| Miscellaneous | 3 | 8 | 4 | 6 |

| | | | | |
|---|---|---|---|---|
| 1. Sources is from Pankow, J. F., and Cherry, J. A. 1996. Dense Chlorinated Solvents and other DNAPLs in Groundwater, Waterloo Press, Portland OR, pp522. 2. Percentage in integer, decimal point below the abandoned; given the symbol ┌-┘ shows less than integer ┌1┘ | | | | |

If the industrial category registration data includes a factory which belongs to multiple categories, a preliminary assessment result (interview and test the early operation behavior, the current actual operation, the category of the chlorinated compound manufacturing process) should be included in a review of the amendment to the industrial category to determine suitable process category, then discuss, by site survey and obtaining relevant data of the factory (such as the analysis based on pollution characteristic concept mode), then the representative industrial category of the factory can be found, which can guarantee the quality of the feedback data.

The third level assessment 40 includes performing a hierarchical cross screening based on the declaration amount and the category scale data to make a preliminary survey list, as a priority order to assess the environmental assessment of the factories in operation. In this embodiment, the category scale data includes selection factors: general category of high risk of pollution, ranking of total declaration amount for a single category of high risk of pollution, general category of target compound declaration, general ranking of target compound declaration, amount of release, wet process, year, inspection and punishment data, which are cross ranked.

The fourth level assessment 50 includes providing a preliminary assessment result and local experience data based on the preliminary survey list, so as to produce an investigation list, as a priority order to investigate the environmental assessment of the factories in operation. In this embodiment, the preliminary assessment result is a strict site preliminary assessment result, that is, considering the factory operation history, the production process characteristics and the hydro geological conditions. The preliminary assessment further includes the application of multiple investigation skills, determination of the sampling location of the high pollution risk soil and groundwater, in order to improve investigation efficiency. Meanwhile, the ratio of the category of the to-be-investigated factory with high risk of pollution is also taken into consideration in order to produce an investigation list.

The local experience data includes the inspection experience of the local environment protection agencies, the change in the area and even the rumor of pollution are used as source of screening data. By means of a questionnaire, the local experience is provided to assist in assessment of the pollution trend of the factories, or provide the name list of the local high risk pollution factories (such as setting a monitoring well in the industry zone to find the factories with high risk of pollution) as a specified investigation list. This mechanism can bring the connection that the local people report to the local environmental protection bureau into the investigation list, which assists in investigating the underground factories. Therefore, the ranking of the investigation list can be adjusted by reference to the local experience data.

The local experience data further includes process operation data and area sensitivity data. The process operation data takes the factory which was set up early as priority concern, puts emphasis on the process operation characteristic and wet process implementation, collects the data on the areas where chlorinated-solvent caused soil and water pollution is very likely to occur, and relevant inspection and punishment data, assesses whether there is similar pollution area, and adjusts the ranking of the investigation list. The area sensitivity data is that the adjacent water protection zone, agricultural irrigation land, groundwater area, high population area are priority screening areas, and the priority ranking of investigation list can be adjusted.

The correction assessment 60 includes performing site survey based on the investigation list, and adjusting the weights of the target compound of the first assessment 20, the high risk pollution categories of the second assessment 30, the environmental assessment of the third assessment 40, and the ranking of the investigation list of the fourth assessment 50, based on the actual investigation result. In this embodiment, the actual investigation result includes: total amount of declaration of polluted projects, cycle life of the product, total scale and proportion of category declaration, process operation characteristic and year.

The assessment priority list 70 includes adjusting the weights of the first, second, third and fourth assessments 20, 30, 40 and 50 based on the correction assessment 60, so as to form a new investigation list.

The dynamic process screening method for a factory in operation in accordance with the preferred embodiment of the present invention is performed by reference to the previous investigation result, and then adjusts the weight of the selection factors, so that lesson can be learned, and after continuous adjustment, the detectable rate can be maintained at as high as 60%, which shows the importance of readjusting the screening mechanism.

The reordering of the potential pollution means that each screen strategy is focused on different subjects. For example, the first round of screening uses a double screening spindle (exceeding regulatory standards monitoring wells around the factory, the larger the total declaration amount) to perform pre exemplary investigation; the second round screening takes the large declaration amount as a single screening spindle, category potential pollution is taken into consideration, then the change rate of the name list of the factories in the second round of screening is much higher than that of the first round of screening (up to 74.1%). The third round of screening adjusts the category of high risk of pollution, the ranking of the target compounds, strengthens the screening of the high risk pollution factories, and the name list of the factories in the third round of screening slightly changes (up to 22.2%) with respect to the second round. The fourth round of screening continues the screening made in the third round, and the name list of the factories in the fourth round of screening significantly changes (up to 47.9%) with respect to the third round. The name list in the fifth round of screening slightly changes (as low as 10.2%) with respect to the fourth round of screening, which means the screening mechanism is gradually stabilized.

While we have shown and described various embodiments in accordance with the present invention, it is clear to those skilled in the art that further embodiments may be made without departing from the scope of the present invention.

## Claims

1. A dynamic process screening method for a factory in operation, **characterized in that**:
a pre-step (10) includes providing process risk data for each factory in operation in every industry;
a first level assessment (20) includes screening out target compound with high risk of pollution based on the process risk data provided by the respective factories;
a second level assessment (30) includes screening out categories or classifications with high risk of pollution based on the process risk data provided by the respective factories;
a third level assessment (40) includes performing a hierarchical cross screening based on the declaration amount and the category scale data to make a preliminary survey list, as a priority order to assess the environmental assessment of the factories in operation;
a fourth level assessment (50) includes providing a preliminary assessment result and local experience data based on the preliminary survey list, so as to produce an investigation list, as a priority order to investigate the environmental assessment of the factories in operation;
a correction assessment (60) includes performing site survey based on the investigation list, and adjusting the weights of the target compound of the first assessment (20), the high risk pollution categories of the second assessment (30), the environmental assessment of the third assessment (40), and the ranking of the investigation list of the fourth assessment (50), based on the actual investigation result; and
an assessment priority list (70) includes adjusting the weights of the first, second, third and fourth assessments (20), (30), (40), (50), and based on the correction assessment (60), so as to form a new investigation list.

2. The dynamic process screening method as claimed in claim 1, wherein the pre-step (10) further includes an application and registration data for each factory in operation in every industry.

3. The dynamic process screening method as claimed in claim 1, wherein the target compound is chlorine containing compound, the screening of the target compound in the first level assessment (20) is based on plural selection factors, which include vertical mobility, the danger of groundwater pollution, high risk of cancer, the occurrence rate in the polluted workplace, preplanned detection rate, and reaction and formation path.

4. The dynamic process screening method as claimed in claim 1, wherein the screening of the categories with high risk of pollution is made by reference to foreign and domestic industrial categories, the classification data of the domestic regulated workplaces are collected in order to better understand the distribution of the domestic industry category with high risk of pollution.

5. The dynamic process screening method as claimed in claim 4, wherein if the industrial category registration data includes a factory which belongs to multiple categories, a preliminary assessment result should be included in a review of an amendment to the industrial category to determine suitable process category.

6. The dynamic process screening method as claimed in claim 1, wherein the category scale data includes selection factors: general category of high risk of pollution, ranking of total declaration amount for a single category of high risk of pollution, general category of target compound declaration, general ranking of target compound declaration, amount of release, wet process, year, inspection and punishment data, which are cross ranked.

7. The dynamic process screening method as claimed in claim 1, wherein the preliminary assessment result is a strict site preliminary assessment result, that is, considering the factory operation history, the production process characteristics and the hydro geological conditions.

8. The dynamic process screening method as claimed in claim 7, wherein the preliminary assessment further includes the application of multiple investigation skills, determination of the sampling location of the high pollution risk soil and groundwater, in order to improve investigation efficiency, the ratio of the category of the to-be-investigated factory with high risk of pollution is also taken into consideration in order to produce an investigation list.

9. The dynamic process screening method as claimed in claim 1, wherein the local experience data includes the inspection experience of the local environment protection agencies, the change in the area and even the rumor of pollution are used as source of screening data, by means of a questionnaire, the local experience is provided to assist in assessment of the pollution trend of the factories, or provide the name list of the local high risk pollution factories as a specified investigation list.

10. The dynamic process screening method as claimed in claim 9, wherein the local experience data further includes process operation data and area sensitivity data, the process operation data takes the factory which was set up early as priority concern, puts emphasis on the process operation characteristic and wet process implementation, collects the data on the areas where chlorinated-solvent caused soil and water pollution is very likely to occur, and relevant inspection and punishment data, assesses whether there is similar pollution area, and adjusts the ranking of the investigation list, the area sensitivity data is that the adjacent water protection zone, agricultural irrigation land, groundwater area, high population area are priority screening areas, and the priority ranking of investigation list can be adjusted.

11. The dynamic process screening method as claimed in claim 1, wherein the actual investigation result includes: total amount of declaration of polluted projects, cycle life of the product, total scale and proportion of category declaration, process operation characteristic and year.
